# EUROPÄISCHE PATENTSCHRIFT

(11) **EP 3 245 079 B1**
(45) Veröffentlichungstag und Bekanntmachung des Hinweises auf die Patenterteilung: **24.03.2021**
(21) Anmeldenummer: 15795140.1
(22) Anmeldetag: 11.11.2015
(51) Int. Cl.: B60C 19/00

(54) **FAHRZEUGLUFTREIFEN MIT SCHALLABSORBIERENDEM MITTEL**
VEHICLE TIRE WITH SOUND ABSORBANT MEANS
PNEUMATIQUE DE VÉHICULE AYANT DES MOYENS D'ABSORPTION ACOUSTIQUE

(30) Priorität: 13.01.2015 DE 102015200349; 30.06.2015 DE 102015212105
(43) Veröffentlichungstag der Anmeldung: 22.11.2017
(73) Patentinhaber: Continental Reifen Deutschland GmbH, 30165 Hannover (DE)
(72) Erfinder: TYBURSKI, Andreas, 31241 Ilsede (DE); SCHÜRMANN, Oliver, 30855 Langenhagen (DE); NABIH, Nermeen, 30173 Hannover (DE)
(74) Vertreter: Continental Corporation
(86) Internationale Anmeldenummer: PCT/EP2015/076279
(87) Internationale Veröffentlichungsnummer: WO 2016/113013

(56) Entgegenhaltungen:
- DE-A1-102007 028 932
- US-A1- 2010 307 655

## Beschreibung

Die Erfindung betrifft einen Fahrzeugluftreifen mit einem in seinem Inneren an der dem Laufstreifen gegenüberliegenden Innenfläche haftend angebrachten schallabsorbierenden Innenabsorber, wobei der Innenabsorber an einem selbsttätig abdichtenden Dichtmittel haftet, welches zumindest unmittelbar nach seinem Aufbringen eine zum Anhaften erforderliche Klebrigkeit aufweist, wobei eine Trennschicht zwischen dem Dichtmittel und dem Innenabsorber angeordnet ist.

Ein derartiger Fahrzeugluftreifen ist beispielsweise aus der US 2010/307655 A1 bekannt. Die Trennschicht soll einerseits eine Akkumulation des Dichtmittels im mittigen Bereich unterhalb des Laufstreifens verhindern, sodass das Dichtmittel möglichst über die gesamte gewünschte Breite verbleibt, andererseits soll das Dichtmittel nicht in das Material des Schallabsorbers migrieren. Die Trennsicht ist beispielsweise ein Resin-Film, insbesondere aus einem thermoplastischen Elastomer.

Aus der DE 10 2007 028 932 A1 ist ein Fahrzeugluftreifen mit einem in seinem Inneren an der dem Laufstreifen gegenüberliegenden Innenfläche haftend angebrachten schallabsorbierende, ringförmigen Innenabsorber bekannt, wobei der Innenabsorber an einem selbsttätig abdichtenden Dichtmittel haftet. Der Innenabsorber ist ein Ring aus offenzelligem Schaumstoff, welcher die Luftschwingung im Reifen reduziert und zu einer Verbesserung des Geräuschverhaltens im Fahrzeug führt. Das an der Reifeninnenseite aufgebrachte Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.

Jedoch kann das Fließverhalten des Dichtmittels durch den auf dem Dichtmittel aufliegenden Innenabsorber nachteilig beeinflusst sein, so dass die erwünschte Dichtwirkung erst verspätet oder gar nicht eintritt. In Fällen, in denen der eindringende Fremdkörper aus dem Reifen wieder austritt und einen großen Luftkanal hinterlässt, ist eine zuverlässige Abdichtung durch das in seinem Fließverhalten nachteilig beeinflusste Dichtmittel besonders schwierig.

Der Erfindung liegt die Aufgabe zu Grunde, die Abdichtung des Reifens bei Durchstichen zu verbessern. Ferner ist es die Aufgabe der Erfindung, ein Verfahren zur Herstellung eines vorgenannten Reifens bereitzustellen.

Gelöst wird die gestellte Aufgabe in Bezug auf den Fahrzeugluftreifen erfindungsgemäß dadurch, dass die Trennschicht eine Folie ist, welche zumindest auf der dem Dichtmittel zugewandten Oberfläche haftungsvermindernde Eigenschaften aufweist.

Erfindungsgemäß ist die Fließeigenschaft des Dichtmittels durch die zwischen dem Dichtmittel und dem Innenabsorber angeordnete Trennschicht positiv beeinflusst. Das Dichtmittel kann hierdurch zuverlässig abdichten.

Der Innenabsorber besteht vorzugsweise aus offenzelligem Schaumstoff, alternativ aus Glaswolle, aus Kork oder aus Synthetikfasern (Fleece) oder aus einer Kombination von zwei oder mehr der vorgenannten Materialien.

Der Innenabsorber ist vorzugsweise ein etwa ringkreisförmiges Bauteil, welches einstückig ausgeführt oder aus zwei oder mehr kreissegmentförmigen Einzelelementen zusammengesetzt ist.

Die Trennschicht ist aus einem Stück oder aus sich überlappenden oder mit Abstand zueinander angeordneten Einzelsegmenten ausgeführt.

Die Folie oder ihre Beschichtung besteht vorzugsweise auf Silikon- oder PTFE-(Fluorkohlenwasserstoffverbindungen, z.B. Perfluoroctansäure)-Basis oder aus Ölen bzw. verschiedenen Fettarten oder aus Papier (z.B. Pergamentpapier, Backpapier) oder Gewebe (aus Kunst- und/oder Naturfasern) .

Silikon ist bei höheren Temperaturen einsetzbar, andere Materialien haben Kostenvorteile.

Wirkprinzip ist die Versiegelung der Oberfläche und Reduzierung der Haftreibung,

Vorteilhaft ist es, wenn die Trennschicht einseitig, vorzugsweise auf der dem Dichtmittel zugewandten Seite Antihaft-Eigenschaften aufweisen. Alternativ weist die Trennschicht beidseitig Antihaft-Eigenschaften auf.#

In einer wiederum anderen Ausführung der Erfindung ist die Trennschicht ein flüssig aufgebrachtes Material, wie beispielsweise Farben und Lacke, Sprühfolien, Trennmittel (z.B. Formtrennmittel).

In einer wiederum anderen Ausführung der Erfindung ist die Trennschicht aus organischem Material, z.B. Blatt eines Gummibaums.

In einer wiederum anderen Ausführung der Erfindung weist die Oberfläche durch ihre Struktur Antihaft-Eigenschaften (Lotusblatt-Effekt) auf.

Vorteilhaft ist es, wenn die Trennschicht Durchlässe aufweist, mittels derer der Innenabsorber partiell unmittelbar auf dem Haftmittel aufliegt und somit in unmittelbaren Haftkontakt mit dem Dichtmittel kommt. Es ist keine zusätzliche Haftbeschichtung auf der zum Innenabsorber weisenden Oberfläche der Trennschicht erforderlich.

Hierbei ist es zweckmäßig , wenn die Durchlässe in Summe eine Fläche von 2 % bis 50 %, vorzugsweise eine Fläche von 5 bis 30 %, besonders bevorzugt eine Fläche von 10 bis 15 % in Bezug auf die Grundfläche des Innenabsorbers einnehmen. In einer besonderen Ausführungsform sind die die Durchlässe gleichmäßig über die Fläche der Trennschicht verteilt angeordnet. Die Grundfläche des Innenabsorbers ist die dem Reifen zugewandte Fläche. Der Einfluss des Innenabsorbers auf die Dichteigenschaften wird dadurch auf ein Minimum reduziert.

Zweckmäßig ist es, wenn der Durchlass in Aufsicht auf die Trennschicht die Form eines Kreises, eines Ovals, und/oder eines länglichen Schlitzes, durchgängig oder durchbrochen aufweist, wobei die Schlitze in der Trennschicht längs, quer oder etwa diagonal angeordnet sind. Durch geeignete Dimensionierung der Durchlässe wird ausreichend fließfähiges Material für eine zuverlässige Abdichtung bereitgestellt und gleichzeitig eine ausreichende Klebkraft für den Schaum erzeugt.

Zweckmäßig ist es, wenn die Trennschicht auf ihrer dem Innenabsorber zugewandten Oberfläche mit Hafteigenschaften ausgestattet ist., wobei diese Hafteigenschaften vorzugsweise durch eine geeignete Oberflächenbehandlung wie z.B. Gummierung der Trennschicht, dem Aufbringen eines weiteren Klebers, einer mechanischen Verbindung wie z.B. Klettband oder einer Kombination daraus erhalten ist.

Der Kleber kann vorkonfektioniert mit der Trennschicht geliefert, aufgesprüht, aufgestrichen, als doppelseitiges Klebeband oder beispielsweise als reine Klebeschicht auf Trägermaterial appliziert werden.

Zweckmäßig ist es, wenn die Trennschicht eine maximale Dicke von ≤ 2,0 mm, vorzugsweise eine Dicke (11) von 0,05 mm bis 0,5 mm aufweist. Die Dicke bemisst sich in radialer Richtung im an dem Reifen angeordneten Zustand.

Vorteilhaft ist es, wenn der Innenabsorber eine radiale Dicke von ≥ 10 mm, vorzugsweise eine Dicke von 20 mm bis 40 mm aufweist.

Die Trennschicht weist eine Breite auf, die gleich oder größer als die Breite der Dichtmittellage ist. Vorteil ist eine komplette Abdeckung der klebrigen Dichtmittellage.

In einer alternativen Ausführungsform weist die Trennschicht eine Breite auf, die zwischen der Breite der Dichtmittellage und der Breite des Innenabsorbers liegt. Vorteil ist ein Ausgleich möglicher Material- und/oder Produktionstoleranzen.

In einer weiteren alternativen Ausführungsform weist die Trennschicht eine Breite auf ,die etwa der Breite des Innenabsorbers entspricht. Vorteil ist eine Material- und damit Gewichtseinsparung.

In wiederum einer weiteren alternativen Ausführungsform weist die Trennschicht eine geringere Breite als der Innenabsorber auf. Vorteil ist hierbei eine verbesserte Klebwirkung des Innenabsorbers auf dem Dichtmittel am Rand.

Die Dichtmittellage kann in allen genannten Ausführungsformen breiter, schmaler oder gleich breit wie der Innenabsorber sein.

Zweckmäßig ist es, wenn die Dicke der Dichtmittellage in denjenigen Bereichen, in denen die Trennschicht unmittelbar auf dem Dichtmittel aufliegt, 1 mm bis 5 mm, vorzugsweise eine Dicke von 1,5 mm bis 3,5 mm beträgt. Im Stand der Technik beträgt die Dicke des Dichtmittels etwa 7 mm. Durch die erfindungsgemäß stark verringerte Dicke des Dichtmittels sind Kostenvorteile erzielt.

Zweckmäßig ist es, wenn die Dicke des Dichtmittels lokal unterschiedlich ist,wie beispielsweise im Bereich von Durchlässen dicker oder konturiert.

Im Rahmen der Erfindung kommen sämtliche Dichtmittel in Frage, die selbsttätig abdichten und zumindest unmittelbar nach dem Aufbringen auf die innere Oberfläche des Reifens soweit klebrig sind, dass der Innenabsorber angepresst und derart haftend mit dem Dichtmittel verbunden werden kann. Es eignen sich daher beispielsweise Dichtmittel auf Basis von Polyurethan oder Dichtmittel, welche eineviskose Mischung auf Basis eines Butylkautschukes, eines Polybutens oder auf Basis von Silikon sind.

Erfindungsgemäß kann die Trennschicht beispielsweise gemäß der nachfolgenden Tabelle ausgebildet sein:

**Tabelle**

| Variante | Ausbildung Trennschicht | dem Dichtmittel zugewandte Oberfläche | dem Innenabsorber zugewandte Oberfläche |
|---|---|---|---|
| 1 | Ohne Durchlässe | Nicht fließ verhindernd | Haftende bzw. klebend |
| 2 | Mit Durchlässen | Nicht fließ verhindernd | Nicht klebend |
| 3 | Mit Durchlässen | Nicht fließ verhindernd | Haftend bzw. klebend |

Gemäß dem Stand der Technik wird zunächst das Dichtmittel auf die Innenschicht aufgebracht und anschließend der Innenabsorber an das Dichtmittel im fertigen Reifen angehaftet.

Gemäß dieser Erfindung wird die Trennschicht entweder vor dem Innenabsorber auf das Dichtmittel aufgebracht werden oder gemeinsam mit dem Innenabsorber appliziert oder wird der Innenabsorber mit Trennschicht und Dichtmittel vorkonfektioniert und als Bauteil in den Reifen eingebracht.

Weitere Merkmale, Vorteile und Einzelheiten der Erfindung werden nun anhand der Zeichnungen, die neben einem Ausführungsbeispiel des Standes der Technik ein schematisches erfindungsgemäßes Ausführungsbeispiele darstellen, näher beschrieben. Dabei zeigen die:
Fig. 1 einen Querschnitt durch einen Fahrzeugluftreifen des Standes der Technik;
Fig. 2 einen Querschnitt durch einen erfindungsgemäßen Fahrzeugluftreifen;
Fig. 3a, 3b, 3c, 3d, 3e jeweils eine Aufsicht auf eine Trennschicht mit Durchlässen.

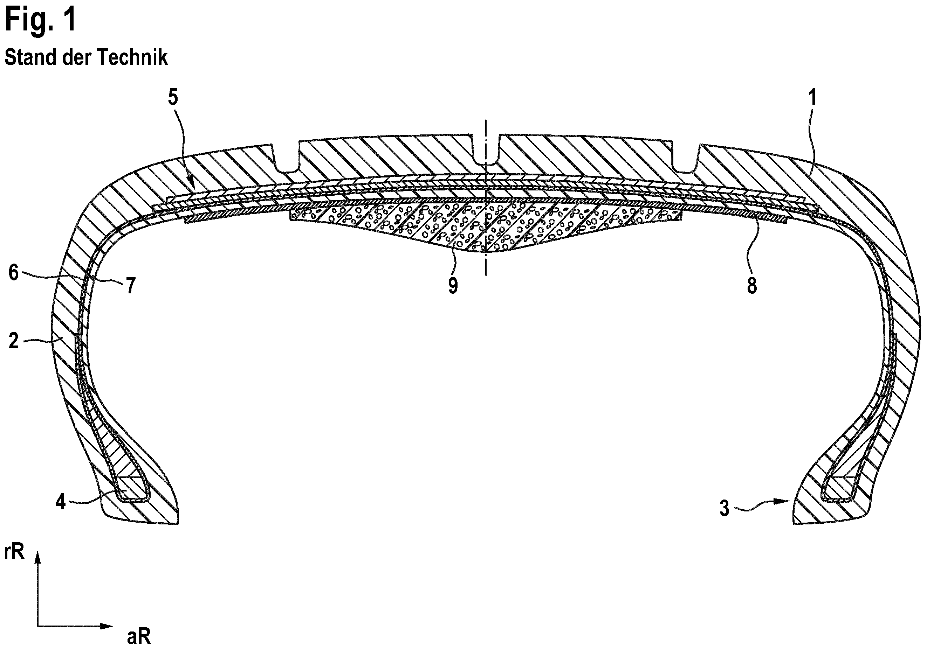

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist ein Dichtmittel 8 aufgebracht, welches in der Lage ist, sich bei Durchstich - Beschädigung des Reifens - selbstabdichtend zu verhalten. Am Dichtmittel 8 haftet ein Innenabsorber 9, welcher unmittelbar nach dem Aufbringen des Dichtmittels 8, solange dieses noch ausreichend klebrig ist, auf das Dichtmittel 8 aufgepresst wird, wie nachfolgend beschrieben wird. Der Innenabsorber 9 ist bezüglich seiner schallabsorbierenden Eigenschaften auf die Reifenhohlraumfrequenz abgestimmt. Der Innenabsorber 9 weist beispielsweise hier einen etwa langgestreckt dreieckförmigen, bezüglich des Reifensäquators symmetrischen Querschnitt auf. Der Schaumstoff des Innenabsorber 9 ist ein offenzelliger Schaumstoff, da dieser am besten dazu geeignet ist, Schall zu absorbieren. Als Dichtmittel kommen beispielsweise Polyurethan-Gele oder viskose Mischungen auf Basis von Butylkautschuken, Polybutenen oder Silikon in Frage, wobei die Mischungen die üblichen weiteren Bestandteile, wie Weichmacheröle, enthalten können. Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 7 mm und 8 mm beträgt. Zumindest unmittelbar nach dem Aufbringen soll das Dichtmittel relativ flüssig und klebrig sein. Zu diesem Zeitpunkt wird der vorgefertigte Innenabsorber 9 in das Innere des Reifens eingebracht. Nach dem Ausreagieren haftet der Innenabsorber 9 an dem elastisch deformierbaren, aber weitestgehend ortsfest verbleibenden Dichtmittel 8.

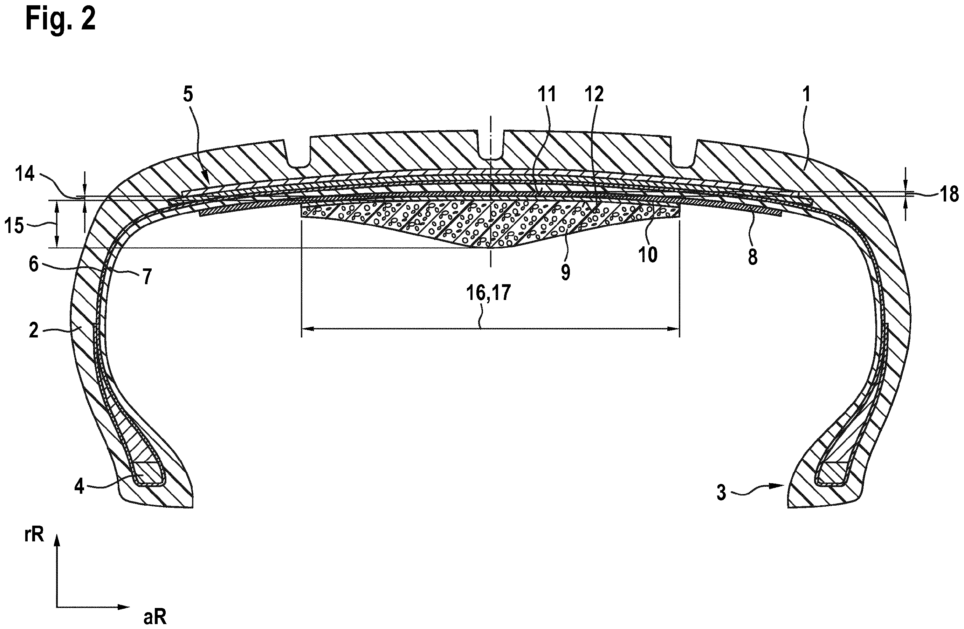

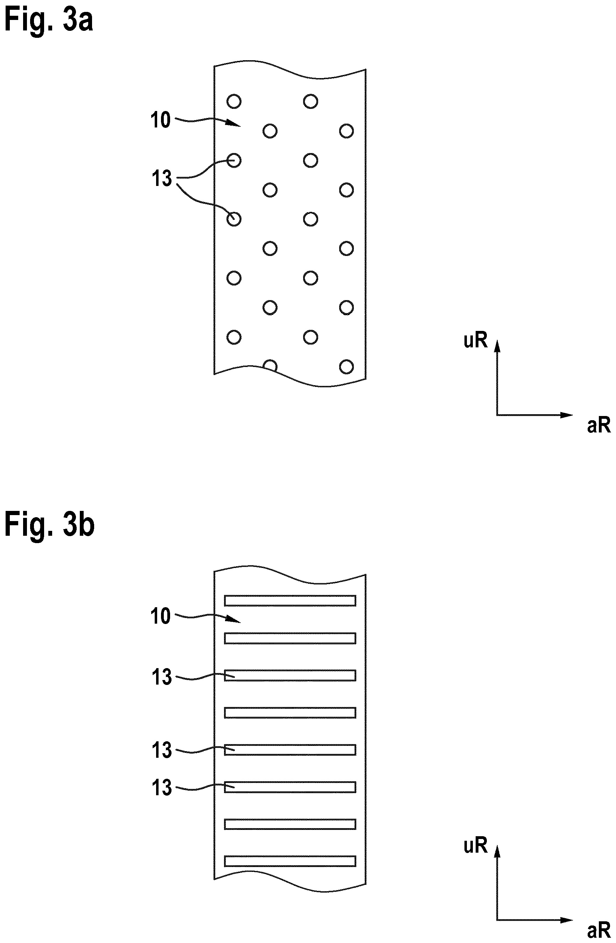

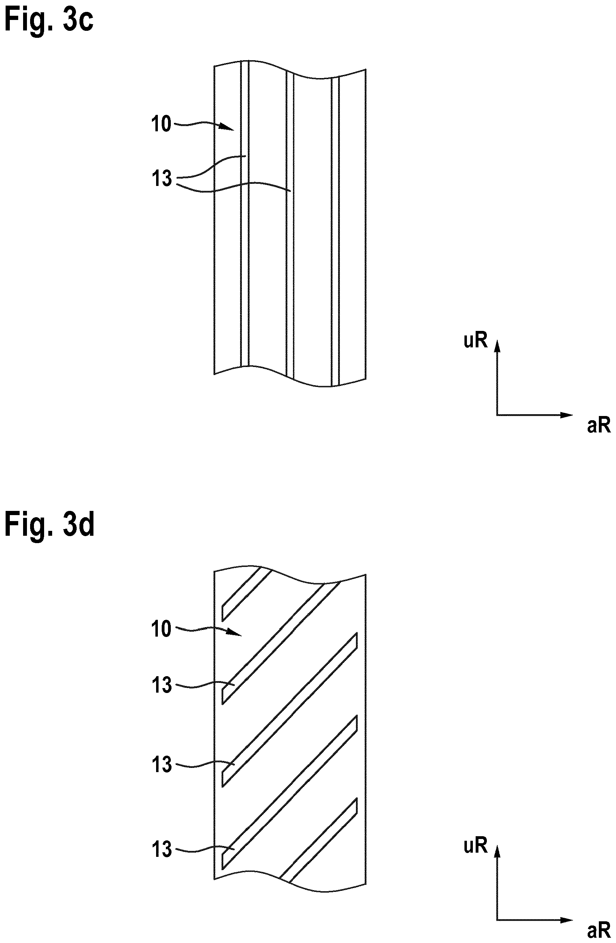

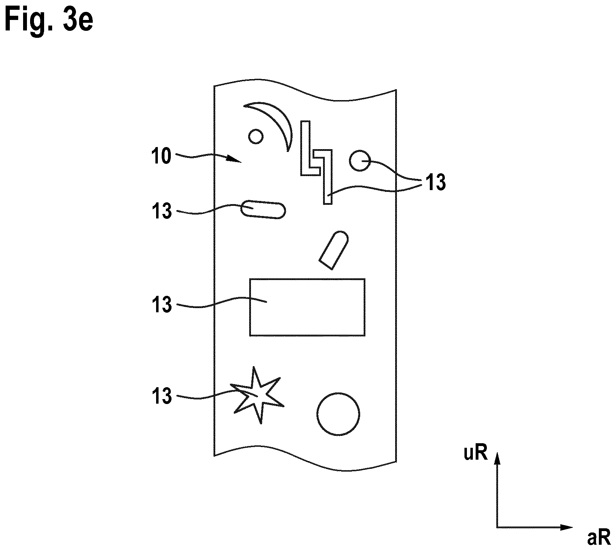

Die Fig. 2 zeigt einen Querschnitt durch einen erfindungsgemäßen Fahrzeugluftreifen. Der erfindungsgemäße Fahrzeugluftreifen unterscheidet sich von dem Reifen des Standes der Technik der Fig. 1 darin, dass eine Trennschicht 10 zwischen dem Dichtmittel 8 und dem Innenabsorber 9 angeordnet ist. Die Trennschicht 10 ist derart beschaffen, dass eine zum Abdichten ausreichende Fließfähigkeit des Dichtmittels 8 sowie eine zuverlässige Haftung des Innenabsorber 9 gewährleistet ist. Die Trennschicht 10 ist beispielsweise eine Folie oder ein in Öl getränktes Gewebe. Die dem Dichtmittel zugewandte Oberfläche 11 der Trennschicht weist haftungsvermindernde Eigenschaften auf. Die dem Innenabsorber zugewandte Oberfläche 12 der Trennschicht hat haftende oder nicht haftende Eigenschaften. Um den Innenabsorber 9 dennoch sicher haftend anzuordnen, kann die Trennschicht 10 Durchlässe 13 (hier nicht dargestellt, vergl. Fig. 3) aufweisen, mittels derer der Innenabsorber 9 partiell unmittelbar auf dem Dichtmittel aufliegt.

Die Durchlässe 13 nehmen in Summe eine Fläche von 2% bis 50% in Bezug auf die Grundfläche des Innenabsorbers ein. Die Durchlässe 13 sind in Aufsicht auf die Trennschicht 10 gleichmäßig über die Fläche der Trennschicht 10 verteilt angeordnet.

Die Trennschicht 10 weist eine Dicke 14 von 0,05 bis 2,0 mm auf. Der Innenabsorber 9 weist eine Dicke 15 von 20 mm bis 40 mm auf. Die Trennschicht 10 weist eine Breite 16 auf, die etwa der Breite 17 des Schaumstoffringes entspricht. Die Dicke 18 der Dichtmittellage 8 beträgt in denjenigen Bereichen, in denen die Trennschicht 10 unmittelbar auf dem Dichtmittel 8 aufliegt, zwischen etwa 1,0 mm und 7,0 mm. Die Dichtmittellage kann lokal unterschiedliche Schichtdicken aufweisen, insbesondere in axialer Richtung konturiert sein. Besonders bevorzugt ist eine Dicke von 3,5 mm in Bereichen außerhalb des Innenabsorbers.

Die Fig. 3a, 3b, 3c, 3d zeigen jeweils eine Aufsicht auf eine Trennschicht 10 mit Durchlässen 13. Die Fig. 3a zeigt kreisförmige Durchlässe 13, die Fig. 3b, 3c und 3d schlitzartige Durchlässe 13, welche in der Fig. 3b quer zur Längserstreckung der Trennschicht 10, in der Fig. 3c parallel zur Längserstreckung der Trennschicht 10 und in der Fig. 3d diagonal zur Längserstreckung der Trennschicht 10 angeordnet sind. Die Fig. 3e zeigt Durchlässe 13 verschiedener Geometrien verwirklicht auf ein und derselben Trennschicht 10. Die Durchlässe 13 können regelmäßig oder unregelmäßig angeordnet sein und/oder in verschiedenen Größen nebeneinander auftreten. Bei 3b sind beispielhaft nicht periodisch wiederkehrende Abstände vorgesehen. Beispielhaft ist bei 3c nicht äquidistant

### Bezugszeichenliste

- 1: Laufstreifen
- 2: Seitenwand
- 3: Wulstbereich
- 4: Wulstkern
- 5: Gürtelverband
- 6: Karkasseinlage
- 7: Innenschicht
- 8: Dichtmittellage
- 9: Innenabsorber
- 10: Trennschicht
- 11: dem Dichtmittel zugewandte Oberfläche der Trennschicht
- 12: dem Innenabsorber zugewandte Oberfläche der Trennschicht
- 13: Durchlass
- 14: Dicke der Trennschicht
- 15: Dicke des Innenabsorbers
- 16: Breite der Trennschicht
- 17: Breite des Innenabsorbers
- 18: Dicke der Dichtmittellage

- rR: radiale Richtung
- aR: axiale Richtung
- uR: Umfangsrichtung

## Patentansprüche

1. Fahrzeugluftreifen mit einem in seinem Inneren an der dem Laufstreifen (1) gegenüberliegenden Innenfläche (7) haftend angebrachten schallabsorbierenden Innenabsorber (9), wobei der Innenabsorber (9) an einem selbsttätig abdichtenden Dichtmittel (8) haftet, welches zumindest unmittelbar nach seinem Aufbringen eine zum Anhaften erforderliche Klebrigkeit aufweist, wobei eine Trennschicht (10) zwischen dem Dichtmittel (8) und dem Innenabsorber (9) angeordnet ist,
**dadurch gekennzeichnet, dass** die Trennschicht (10) derart beschaffen ist, dass eine zum Abdichten ausreichende Fließfähigkeit des Dichtmittels (8) sowie eine zuverlässige Haftung des Innenabsorbers (9) gewährleistet ist, und dass die Trennschicht (10) eine Folie ist, welche zumindest auf der dem Dichtmittel (8) zugewandten Oberfläche haftungsvermindernde Eigenschaften aufweist.

2. Fahrzeugluftreifen nach Anspruch 1, **dadurch gekennzeichnet, dass** die Trennschicht eine Sprühfolie ist.

3. Fahrzeugluftreifen nach Anspruch 1 oder 2, **dadurch gekennzeichnet, dass** die Trennschicht (10) Durchlässe (13) aufweist, mittels derer, der Innenabsorber (9) partiell unmittelbar auf dem Dichtmittel (8) aufliegt und somit in unmittelbaren Haftkontakt mit dem Dichtmittel (8) kommt.

4. Fahrzeugluftreifen nach Anspruch 3, **dadurch gekennzeichnet, dass** die Durchlässe (13) in Summe eine Fläche von 2 % bis 50 %, vorzugsweise eine Fläche von 5 bis 30%, besonders bevorzugt eine Fläche von 10 bis50% in Bezug auf die Grundfläche des Innenabsorbers (9) einnehmen.

5. Fahrzeugluftreifen nach einem oder beiden der Ansprüche 3 und 4, **dadurch gekennzeichnet, dass** der Durchlass (13) in Aufsicht auf die Trennschicht (10) die Form eines Kreises, eines Ovals, eines länglichen Schlitzes und/oder eine beliebige Form, durchgängig oder durchbrochen aufweist, wobei die Schlitze in der Trennschicht längs, quer oder etwa diagonal angeordnet sind.

6. Fahrzeugluftreifen nach einem oder mehreren der vorangehenden Ansprüche, **dadurch gekennzeichnet, dass** die Trennschicht (10) auf ihrer dem Innenabsorber zugewandten Oberfläche (12) mit Hafteigenschaften ausgestattet ist.

7. Fahrzeugluftreifen nach einem oder mehreren der vorangehenden Ansprüche, **dadurch gekennzeichnet, dass** die Trennschicht (10) eine maximale Dicke (14) von ≤ 2.0 mm, vorzugsweise eine Dicke (14) von 0.05 mm bis 0.5 mm (bitte ergänzen) aufweist.

8. Fahrzeugluftreifen nach einem oder mehreren der vorangehenden Ansprüche, **dadurch gekennzeichnet, dass** der Innenabsorber (9) eine Dicke (15) von ≥ 10 mm, vorzugsweise eine Dicke (15) von 20 mm bis 40 mm aufweist.

9. Fahrzeugluftreifen nach einem oder mehreren der vorangehenden Ansprüche, **dadurch gekennzeichnet, dass** das Dichtmittel (8) ein Polyurethan-Gel ist.

10. Fahrzeugluftreifen nach einem oder mehreren der vorangehenden Ansprüche 1 - 8, **dadurch gekennzeichnet, dass** das Dichtmittel (8) eine viskose Mischung auf Basis eines Butylkautschukes, eines Polybutens oder auf Basis von Silikon ist.

11. Fahrzeugluftreifen nach einem oder mehreren der vorangehenden Ansprüche, **dadurch gekennzeichnet, dass** die Trennschicht (10) eine Breite (16) aufweist, die etwa der Breite (17) des Innenabsorbers (9) entspricht.

12. Fahrzeugluftreifen nach einem oder mehreren der vorangehenden Ansprüche, **dadurch gekennzeichnet, dass** die Dicke (18) der Dichtmittellage (8) in denjenigen Bereichen, in denen die Trennschicht (10) unmittelbar auf dem Dichtmittel (8) aufliegt, 1 mm bis 5 mm, vorzugsweise eine Dicke von 1,5 mm bis 3,5 mm beträgt.

13. Fahrzeugluftreifen nach einem oder mehreren der vorangehenden Ansprüche, **dadurch gekennzeichnet, dass** die Dicke (18) der Dichtmittellage (8) lokal unterschiedlich ist, vorzugsweise dass die Dicke (18) der Dichtmittellage (8) im Bereich der Durchlässe (10) unterschiedlich ist.

14. Verfahren zur Herstellung eines Fahrzeugluftreifens gemäß einem oder mehrerer der vorangehenden Ansprüche, **dadurch gekennzeichnet, dass** man den Innenabsorber radial außen mit der Trennschicht belegt und dass man das Dichtmittel auf die Trennschicht aufbringt und anschließend am bereits vulkanisierten Reifen anordnet.

## Claims

1. Pneumatic vehicle tyre having a sound-absorbing inner absorber (9) which is adhesively attached in the interior of said tyre to the inner surface (7) opposite from the tread (1), wherein the inner absorber (9) adheres to a self-sealing sealant (8), which at least immediately after its application has a tackiness required for the purposes of adhesive attachment, wherein a separating layer (10) is arranged between the sealant (8) and the inner absorber (9),
**characterized in that**
the separating layer (10) is made in such a way as to ensure a flowability of the sealant (8) that is sufficient for the purposes of sealing and also a reliable adhesion of the inner absorber (9), and **in that** the separating layer (10) is a film which has adhesion-reducing properties at least on the surface that is facing the sealant (8).

2. Pneumatic vehicle tyre according to Claim 1, **characterized in that** the separating layer is a spray film.

3. Pneumatic vehicle tyre according to Claim 1 or 2, **characterized in that** the separating layer (10) has openings (13), by means of which the inner absorber (9) partially rests directly on the sealant (8) and thus comes into direct adhesive contact with the sealant (8).

4. Pneumatic vehicle tyre according to Claim 3, **characterized in that** the openings (13) occupy, in total, an area of from 2% to 50%, preferably an area of from 5 to 30%, particularly preferably an area of from 10 to 50%, with respect to the surface area of the inner absorber (9).

5. Pneumatic vehicle tyre according to one or both of Claims 3 and 4, **characterized in that** the opening (13), in top view of the separating layer (10), has the shape of a circle, of an oval, of an elongated slit and/or any desired shape, in an uninterrupted or broken-through manner, the slits in the separating layer being arranged lengthways, transversely or roughly diagonally.

6. Pneumatic vehicle tyre according to one or more of the preceding claims, **characterized in that** the separating layer (10) is provided with adhesive properties on its surface (12) facing the inner absorber.

7. Pneumatic vehicle tyre according to one or more of the preceding claims, **characterized in that** the separating layer (10) has a maximum thickness (14) of ≤ 2.0 mm, preferably a thickness (14) of from 0.05 mm to 0.5 mm.

8. Pneumatic vehicle tyre according to one or more of the preceding claims, **characterized in that** the inner absorber (9) has a thickness (15) of ≥ 10 mm, preferably a thickness (15) of from 20 mm to 40 mm.

9. Pneumatic vehicle tyre according to one or more of the preceding claims, **characterized in that** the sealant (8) is a polyurethane gel.

10. Pneumatic vehicle tyre according to one or more of the preceding Claims 1 - 8, **characterized in that** the sealant (8) is a viscous mixture based on a butyl rubber, on a polybutene or on silicone.

11. Pneumatic vehicle tyre according to one or more of the preceding claims, **characterized in that** the separating layer (10) has a breadth (16) which roughly corresponds to the breadth (17) of the inner absorber (9).

12. Pneumatic vehicle tyre according to one or more of the preceding claims, **characterized in that** the thickness (18) of the sealant layer (8) in those regions in which the separating layer (10) directly rests on the sealant (8) is from 1 mm to 5 mm, preferably a thickness of from 1.5 mm to 3.5 mm.

13. Pneumatic vehicle tyre according to one or more of the preceding claims, **characterized in that** the thickness (18) of the sealant layer (8) has local variations, preferably **in that** the thickness (18) of the sealant layer (8) is different in the region of the openings (13).

14. Method for producing a pneumatic vehicle tyre according to one or more of the preceding claims, **characterized in that** the inner absorber is covered with the separating layer radially on the outside and **in that** the sealant is applied to the separating layer and then arranged on the already vulcanized tyre.

## Revendications

1. Pneumatique de véhicule comprenant un absorbeur acoustique intérieur (9) appliqué de manière adhérente à l'intérieur dudit pneumatique sur la surface intérieure (7) opposée à la bande de roulement (1), l'absorbeur intérieur (9) adhérant à un moyen d'étanchéité (8) auto-étanchéifiant qui présente, au moins immédiatement après son application, un pouvoir collant requis pour l'adhérence, une couche de séparation (10) étant disposée entre le moyen d'étanchéité (8) et l'absorbeur intérieur (9),
**caractérisé en ce que**
la couche de séparation (10) est réalisée de manière à garantir une fluidité du moyen d'étanchéité (8), suffisante pour l'étanchéité, et une adhérence fiable de l'absorbeur intérieur (9), et **en ce que** la couche de séparation (10) est un film qui présente des propriétés de réduction d'adhérence au moins sur la surface dirigée vers le moyen d'étanchéité (8).

2. Pneumatique de véhicule selon la revendication 1, **caractérisé en ce que** la couche de séparation est un film pulvérisé.

3. Pneumatique de véhicule selon la revendication 1 ou 2, **caractérisé en ce que** la couche de séparation (10) comporte des passages (13) permettant d'appliquer l'absorbeur intérieur (9) partiellement directement sur le moyen d'étanchéité (8) et donc de venir en contact d'adhérence direct avec le moyen d'étanchéité (8).

4. Pneumatique de véhicule selon la revendication 3, **caractérisé en ce que** les passages (13) occupent au total une surface de 2 % à 50 %, de préférence une surface de 5 à 30 %, de manière particulièrement préférée une surface de 10 à 50 %, par rapport à la surface de base de l'absorbeur intérieur (9).

5. Pneumatique de véhicule selon l'une des revendications 3 et 4 ou les deux, **caractérisé en ce que**, en vue de dessus de la couche de séparation (10), le passage (13) a la forme d'un cercle, d'un ovale, d'une fente allongée et/ou une forme quelconque, continue ou discontinue, les fentes étant ménagées dans la couche de séparation longitudinalement, transversalement ou à peu près en diagonale.

6. Pneumatique de véhicule selon une ou plusieurs des revendications précédentes, **caractérisé en ce que** la couche de séparation (10) est pourvue de propriétés adhésives sur sa surface (12) dirigée vers l'absorbeur intérieur.

7. Pneumatique de véhicule selon une ou plusieurs des revendications précédentes, **caractérisé en ce que** la couche de séparation (10) a une épaisseur maximale (14) ≤ 2,0 mm, de préférence une épaisseur (14) de 0,05 mm à 0,5 mm.

8. Pneumatique de véhicule selon une ou plusieurs des revendications précédentes, **caractérisé en ce que** l'absorbeur intérieur (9) a une épaisseur (15) ≥ 10 mm, de préférence une épaisseur (15) de 20 mm à 40 mm.

9. Pneumatique de véhicule selon une ou plusieurs des revendications précédentes, **caractérisé en ce que** le moyen d'étanchéité (8) est un gel de polyuréthane.

10. Pneumatique de véhicule selon une ou plusieurs des revendications précédentes 1-8, **caractérisé en ce que** le moyen d'étanchéité (8) est un mélange visqueux à base de caoutchouc butyle, de polybutène ou à base de silicone.

11. Pneumatique de véhicule selon une ou plusieurs des revendications précédentes, **caractérisé en ce que** la couche de séparation (10) a une largeur (16) qui correspond à peu près à la largeur (17) de l'absorbeur intérieur (9).

12. Pneumatique de véhicule selon une ou plusieurs des revendications précédentes, **caractérisé en ce que**, dans les zones dans lesquelles la couche de séparation (10) est en appui direct sur le moyen d'étanchéité (8), l'épaisseur (18) de la couche d'étanchéité (8) est de 1 mm à 5 mm, de préférence une épaisseur de 1,5 mm à 3,5 mm.

13. Pneumatique de véhicule selon une ou plusieurs des revendications précédentes, **caractérisé en ce que** l'épaisseur (18) du moyen d'étanchéité (8) est localement différente, de préférence **en ce que** l'épaisseur (18) de la couche de moyen d'étanchéité (8) dans la région des passages (13) est différente.

14. Procédé de fabrication d'un pneumatique de véhicule selon une ou plusieurs des revendications précédentes, **caractérisé en ce que** l'on garnit l'absorbeur intérieur, radialement à l'extérieur, de la couche de séparation et **en ce que** l'on applique le moyen d'étanchéité sur la couche de séparation puis on le dispose sur le pneumatique déjà vulcanisé.
